# EUROPÄISCHE PATENTSCHRIFT

(11) **EP 0 625 749 B1**
(45) Veröffentlichungstag und Bekanntmachung des Hinweises auf die Patenterteilung: **11.08.1999**
(21) Anmeldenummer: 94106998.1
(22) Anmeldetag: 04.05.1994
(51) Int. Cl.: G06F 9/445, G06F 9/46

(54) **Betriebsverfahren für einen Rechner, und ein Rechner**
Operating method for a computer, and a computer
Méthode d'opération pour un ordinateur, et un ordinateur

(30) Priorität: 17.05.1993 DE 4316491
(43) Veröffentlichungstag der Anmeldung: 23.11.1994
(73) Patentinhaber: SIEMENS AKTIENGESELLSCHAFT, 80333 München (DE)
(72) Erfinder: Kelling, Wido, D-81541 München (DE); Jollans, Philip, D-82515 Wolfratshausen (DE)

(56) Entgegenhaltungen:
- EP-A- 0 427 067
- ELEKTRONIK, Bd.37, Nr.15, Juli 1988, MUNCHEN DE Seiten 110 - 113 W.METTERHAUSEN 'Das Betriebssystem L3'
- ELEKTRONIK, Bd.39, Nr.19, September 1989, MUNCHEN DE Seiten 53 - 59 P.SIWON 'Betriebsarten des 80386'
- CHIP PLUS, Nr.9, September 1989, WüRZBURG DE Seiten 6 - 15 J.BODENKAMP 'Die Pc-Welt wird revolutioniert'
- PATENT ABSTRACTS OF JAPAN vol. 13, no. 167 (P-861) 20. April 1989 & JP-A-01 004 838 (YOKOGAWA ELECTRIC CORP) 10. Januar 1989
- PATENT ABSTRACTS OF JAPAN vol. 13, no. 505 (P-959) 14. November 1989 & JP-A-01 204 154 (FUJITSU LTD) 16. August 1989

## Beschreibung

Die vorliegende Erfindung betrifft ein Betriebsverfahren für einen Rechner mit einem Prozessor und einem Speicher, wobei im Speicher ein Betriebssystem und ein dem Betriebssystem vorgeschaltetes Verwaltungsprogramm abgespeichert sind.

Ein derartiges Betriebsverfahren ist beispielsweise aus der EP-0 427 067 A2 bekannt. Bei dem Verfahren des Standes der Technik werden alle Interrupts vom Kontrollprogramm abgefangen und gegebenenfalls von dem Betriebssystem auf ein anderes Betriebssystem umgeschaltet. Im Stand der Technik ist aber nichts darüber ausgesagt, wie erreicht wird, daß das Betriebssystem nicht das Kontrollprogramm blockiert.

Die Aufgabe der vorliegenden Erfindung besteht folglich darin, ein Verfahren anzugeben, durch das gewährleistet ist, daß das Betriebssystem das Verwaltungsprogramm nicht blockiert.

Die Aufgabe wird dadurch gelöst, daß im Speicher für das Betriebssystem und das Verwaltungsprogramm mindestens je ein Konfigurationsdatensatz abgespeichert ist, mittels dessen festlegbar ist, welche Befugnisse dem Betriebssystem bzw. dem Verwaltungsprogramm zugeordnet sind, und daß die Konfigurationsdatensätze nur mittels des Verwaltungsprogramms änderbar sind.

Wenn der Prozessor in einer Normalbetriebsart mit Normalbefehlen und in einer privilegierten Betriebsart zusätzlich auch mit privilegierten Befehlen betreibbar ist und das Betriebssystem in der Normalbetriebsart und das Verwaltungsprogramm in der privilegierten Betriebsart abgearbeitet wird, ist es möglich, die Konfigurationsdatensätze einfach den betreffenden Betriebsarten zuzuordnen.

Wenn das Betriebssystem für den Anwender teilweise in der privilegierten Betriebsart abgearbeitet zu werden scheint, zeigt das Betriebssystem für den Anwender unabhängig davon, ob es mit oder ohne das Verwaltungsprogramm betrieben wird, das gleiche Verhalten. Anwenderprogramme sind also ohne Modifikationen ablauffähig.

Um eine ordnungsgemäße Abarbeitung des Betriebssystems gewährleisten zu können, wird zur Festlegung der Befugnisse des Betriebssystems bei scheinbarer Abarbeitung in der privilegierten Betriebsart und bei Abarbeitung in der Normalbetriebsart je ein eigener Konfigurationsdatensatz verwendet.

Wenn das Betriebssystem jederzeit ohne Beeinflussung des Verwaltungsprogramms reinitialisiert werden kann, ist es möglich, das Betriebssystem nach einer Blockierung des Betriebssystems, z. B. aufgrund eines Bedienfehlers, jederzeit neu zu starten, ohne das Verwaltungsprogramm zu unterbrechen.

Weitere Vorteile und Einzelheiten ergeben sich aus der nachfolgenden Beschreibung eines Ausführungsbeispiels, anhand der Zeichnung sowie in Verbindung mit den weiteren Unteransprüchen. Dabei zeigen:
FIG 1 ein Blockschaltbild eines Rechners und
FIG 2 die Belegung des Speichers des Rechners.

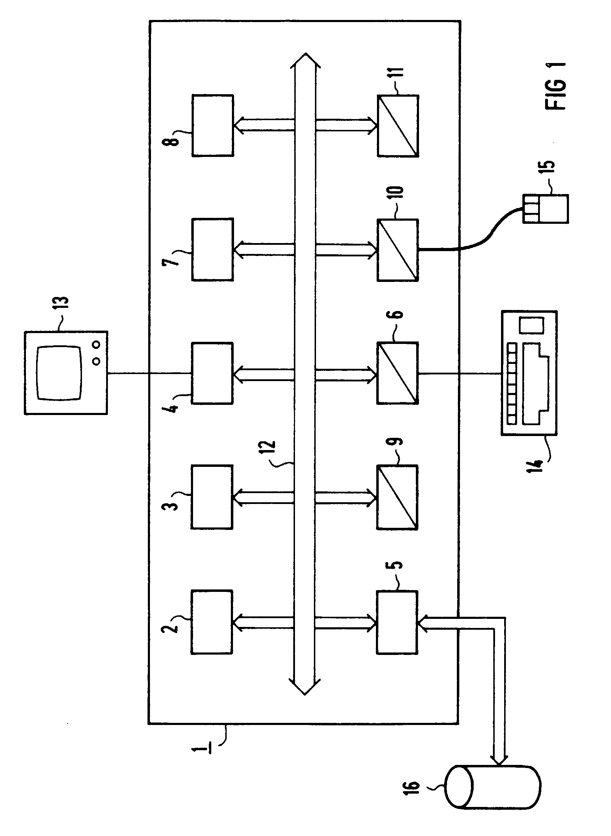

Gemäß FIG 1 besteht der Rechner 1 aus einem Prozessor 2, einem Speicher 3, einer Monitorschnittstelle 4, einer Massenspeicherschnittstelle 5 und einer Tastaturschnittstelle 6. Ferner weist der Rechner 1 ein Timermodul 7, einen Interruptcontroller 8 sowie Schnittstellen 9 bis 11 auf. Die Komponenten 2 bis 11 sind über den Bus 12 miteinander verbunden.

An die Monitorschnittstelle 4 ist ein Monitor 13 angeschlossen. An die Tastaturschnittstelle 6 ist eine Tastatur 14 angeschlossen. An die Massenspeicherschnittstelle 5 ist eine Festplatte 16 angeschlossen. Die Schnittstelle 9 ist eine Schnittstelle zur Prozeßperipherie, d.h. zu einem zu steuernden technischen Prozeß. Die Schnittstellen 10 und 11 sind beispielsweise eine serielle Schnittstelle und eine Schnittstelle zu einem Diskettenlaufwerk. Über die Schnittstelle 10 ist z. B. die Maus 15 angeschlossen.

Der Prozessor 2 ist im vorliegenden Fall ein INTEL 80386 oder ein INTEL 80486 oder ein anderer aufwartskompatibler Prozessor. Die Architektur des Rechners 1 ist eine Standard-PC-Architektur.

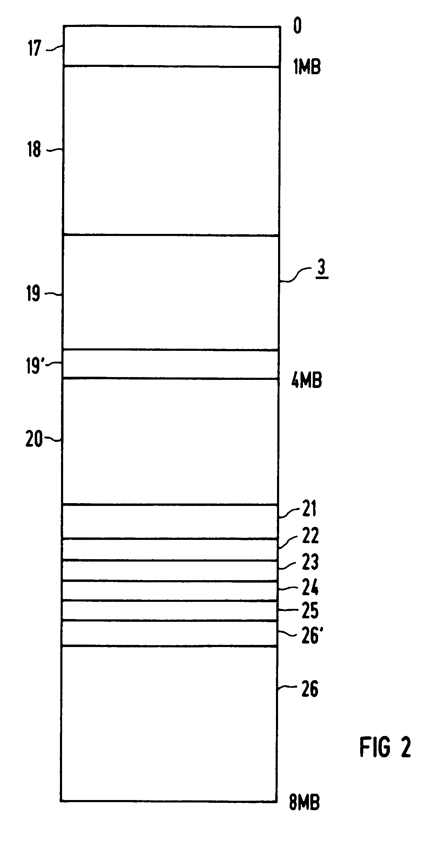

Beim Einschalten des Rechners 1 über einen nicht dargestellten Schalter wird, wie allgemein üblich, das Betriebssystem gemäß FIG 2 aus der Festplatte 16 in den Speicherbereich 17 des Speichers 3 geladen. Das Betriebssystem ist im vorliegenden Fall MS-DOS von Microsoft. Beim Booten von MS-DOS werden eine Reihe sogenannter Treiber installiert. Hierzu ist auf der Festplatte 16 eine Datei CONFIG.SYS vorhanden, in der die Treiber aufgelistet sind. Die Treiber werden dabei in der Reihenfolge ihrer Auflistung geladen.

Im vorliegenden Fall wird als erstes nicht ein Treiber, sondern ein Programm geladen und gestartet, das die Große des Speichers 3 ermittelt. Im vorliegenden Fall sind dies 8 Megabyte. Das Programm speichert daraufhin diesen Wert im Speicher 3 im Speicherbereich 25 ab. Ferner installiert das Programm eine Routine, die immer dann aufgerufen wird, wenn der Speicherausbau ermittelt werden soll. Beim Aufruf dieser Routine wird aber nicht der Wert 8 Megabyte, sondern der Wert 4 Megabyte zurückgeliefert. Programmen, die unter dem Betriebssystem MS-DOS laufen, wird also vorgetäuscht, daß im vorliegenden Fall nur der halbe Speicher vorhanden ist.

Nach dem Ausführen dieses Programms geht das Booten von MS-DOS weiter. Das gesamte Betriebssystem MS-DOS ist dabei im Speicherbereich 17 abgelegt. Nach dem Booten von MS-DOS wird ein extended Memory manager installiert, z. B. der 386MAX von Qualitas. Beim Installieren dieses Programms wird der Prozessor 2 in den sogenannten protected mode umgeschaltet. Von diesem Moment an sind über den extended memory manager Zugriffe auf den Speicherbereich über 1 Megabyte möglich. Weiterhin kann von diesem Moment an der Prozessor 2 in vier verschiedenen Privilegebenen betrieben werden, nämlich den Ebenen 0 bis 3. Die Ebene 3 wird dabei im folgenden als Normalbetriebsart bezeichnet, die Ebene 0 als privilegierte Betriebsart. In der privilegierten Beriebsart kann der Prozessor 2 zusätzlich zu Normalbefehlen auch privilegierte Befehle ausführen.

Der extended memory manager stellt, wie allgemein üblich, einen Satz von Funktionsaufrufen zur Verfügung, die in ihrer Gesamtheit mit virtual control programm interface (VCPI) bezeichnet sind.

Nach der Installation des extended memory managers laufen MS-DOS-Programme nicht mehr, wie sonst üblich, im Realmode, sondern im virtual86-mode. Der virtual86-mode ist eine Spezialbetriebsart des Prozessors 2, wobei der Prozesor 2 in der Privilegebene 3 arbeitet.

Nach dem Installieren des extended memory managers wird MS-DOS weitergebootet, wie allgemein üblich. Sodann wird ein Ladeprogramm gestartet. Dieses Ladeprogramm lädt ein Echtzeit-Betriebssystem zur Bewältigung von Steuerungsaufgaben, z. B. RMOS von Siemens, in den Speicherbereich 20 oberhalb 4 Megabyte. Vor dem Laden des Echtzeit-Betriebssystems wird der Prozessor 2 durch das Ladeprogramm mittels eines VCPI-Aufrufs in die privilegierte Betriebsart umgeschaltet. Sodann wird durch das Echtzeit-Betriebssystem das Verwaltungsprogramm in den Speicherbereich 21 geladen und gestartet. Das Verwaltungsprogramm schaltet den Prozessor 2 in die Normalbetriebsart um und kehrt dann über einen VCPI-Aufruf zum Ladeprogramm für das Echtzeit-Betriebssystem zurück. Entscheidend ist hierbei, daß vor dem Starten des Echtzeit-Betriebssystems der Prozessor 2 in die privilegierte Betriebsart geschaltet wird und die Rückkehr zum Ladeprogramm in der Normalbetriebsart erfolgt. Dadurch ist automatisch gewährleistet, daß das Echtzeit-Betriebssystem und das Verwaltungsprogramm in der privilegierten Betriebsart ablaufen, während MS-DOS, WINDOWS, Programme unter WINDOWS und sogar der extended memory manager in der Normalbetriebsart ablaufen.

Das Ladeprogramm beendet sich daraufhin. Der Benutzer ist nunmehr im MS-DOS-Betriebssystem. Er kann daher das sogenannte WINDOWS-Betriebssystem starten. WINDOWS wird daraufhin in die Speicherbereiche 17 und 18 geladen.Der Speicherbereich 19 ist für WINDOWS-Programm und deren Daten reserviert. Der Speicherbereich 26 ist für Programme und Daten reserviert, die unter RMOS aufgerufen bzw. benötigt werden.

Der Prozessor 2 wird im Multitasking betrieben, d. h., daß das Echtzeit-Betriebssystem und WINDOWS scheinbar parallel ablaufen. Das Echtzeit-Betriebssystem läuft dabei in an sich bekannter Art und Weise in der privilegierten Betriebsart ab. Das Verwaltungsprogramm, das Teil des Echtzeit-Betriebssystems ist, läuft ebenfalls in der privilegierten Betriebsart ab.

Programme, die von WINDOWS aus aufgerufen werden, laufen in der Normalbetriebsart. Der WINDOWS-Kernel dagegen läuft üblicherweise in der privilegierten Betriebsart. WINDOWS führt dabei auch Befehle und sonstige Zugriffe aus, die nur in der privilegierten Betriebsart erfolgen dürfen. Bei der vorliegenden Erfindung jedoch läuft auch der WINDOWS-Kernel selbst in der Normalbetriebsart. Der dadurch entstehende Konflikt wird wie folgt gelöst:

Im Speicher 3 sind üblicherweise, d. h. wenn WINDOWS allein läuft, mehrere Systemtabellen abgespeichert, die zusammen einen Konfigurationsdatensatz definieren. Die Systemtabellen umfassen beispielsweise die local descriptor table, die global descriptor table, das page directory und die interrupt descriptor table. Mittels dieses Konfigurationsdatensatzes wird festgelegt, welche Privilegien der Prozessor 2 in welcher Betriebsart hat und wie aus logischen physikalische Adressen ermittelt werden. Durch die interrupt descriptor table wird beispielsweise festgelegt, wie Interrupts in einer bestimmten Betriebsart bearbeitet werden. Durch andere Systemdaten, die ebenfalls dem Konfigurationsdatensatz zuzurechnen sind, wird festgelegt, ob der Prozessor 2 in einer bestimmten Betriebsart auf die Schnittstellen 9 bis 11 zugreifen darf oder nicht.

Bei der vorliegenden Erfindung werden durch das Verwaltungsprogramm mehrere derartiger Konfigurationsdatensätze erzeugt. Im Speicherbereich 22 wird dabei abgespeichert, unter welcher Konfiguration der Prozessor 2 im Verwaltungsprogramm bzw. im Echtzeit-Betriebssystem tatsächlich arbeitet. In analoger Weise wird im Speicherbereich 23 abgespeichert, welche Privilegien das Betriebssystem WINDOWS hat, wenn es für den Anwender bzw. für WINDOWS selbst in der privilegierten Betriebsart des Prozessors 2 zu laufen scheint. Im Speicherbereich 24 wird abgespeichert, welche Privilegien ein Programm hat, das von WINDOWS aus aufgerufen wird. Auf die Speicherbereich 22 bis 24 darf dabei nur zugegriffen werden, wenn der Prozessor 2 tatsächlich in der privilegierten Betriebsart arbeitet, also nur dann, wenn entweder das Verwaltungsprogramm oder aber das Echtzeit-Betriebssystem abgearbeitet wird. Ferner gibt es noch einen weiteren, WINDOWS-internen Konfigurationsdatensatz, in dem abgespeichert ist, welche Befugnisse in der privilegierten bzw. der Normalbetriebsart WINDOWS zu haben glaubt. Dieser Datensatz ist im Speicherbereich 19' abgespeichert.

Für die Normalbetriebsart sind alle privilegierten Befehle gesperrt. Wenn nun der WINDOWS-Kernel, der scheinbar in der privilegierten Betriebsart abgearbeitet wird, einen privilegierten Befehl ausführen will, so erzeugt dies einen Software-Interrupt. Aufgrund dieses Interrupts wird eine Interrupt-Service-Routine aufgerufen. In der Interrupt-Service-Routine wird in die privilegierte Betriebsart umgeschalten und das Verwaltungsprogramm aufgerufen. Das Verwaltungsprogramm ist daher in der Lage, im Speicherbereich 23 abzufragen, ob der Befehl für den Kernel zugelassen ist. Wenn ja, führt das Verwaltungsprogramm den Befehl aus. Wenn nein, wird ein Ersatzverhalten vorgetäuscht. Wenn beispielsweise der Prozessor 2 unter WINDOWS auf die Schnittstelle 11 zugreifen will und die Schnittstelle 11 für WINDOWS gesperrt ist, so wird das Nichtvorhandensein der Schnittstelle 11 vorgetäuscht. Sodann wird zu WINDOWS zurückgekehrt.

Eine ähnliche Vorgehensweise erfolgt beim Auftreten von Interrupts. Interrupts werden normalerweise vom Betriebssystem, also von WINDOWS, abgearbeitet. Im vorliegenden Fall erzeugt jeder Interrupt aber einen Aufruf des Verwaltungsprogramms. Das Verwaltungsprogramm kann daher, unter Berücksichtigung der Daten in den Speicherbereichen 22 bis 24, entscheiden, ob es den Interrupt selbst behandelt, ob es den Interrupt an das Echtzeit-Betriebssystem weitergibt oder ob es ihn an WINDOWS weitergibt, d. h. die Interrupt-Service-Routine von WINDOWS aufruft.

Wie sich aus dem obenstehenden ergibt, ist der Inhalt der Speicherbereiche 19' und 22 bis 24 von besonderer Bedeutung für die Ausführung obenstehenden Verfahrens. Die Speicherbereiche 19' und 22 bis 24 sind daher dahingehend gekennzeichnet, daß sie nur in der privilegierten Betriebsart angesprochen werden können. Ein Zugriffsversuch durch WINDOWS erzeugt folglich einen Interrupt und damit wieder einen Aufruf des Verwaltungsprogramms.

Versucht WINDOWS auf den Speicherbereich 19'lesend zuzugreifen, so gestattet das Verwaltungsprogramm den Zugriff. Versucht WINDOWS hingegen schreibend zuzugreifen, so wird wie folgt vorgegangen:

Zunächst wird der Zugriffsschutz auf den Speicherbereich 19' aufgehoben. Sodann wird der Prozessor 2 in den Single-Step-Modus umgeschaltet. Sodann wird der schreibende Speicherzugriff unter der Kontrolle des Verwaltungsprogramms ausgeführt. Als nächstes wird erneut das Verwaltungsprogramm aufgerufen. Das Verwaltungsprogramm überprüft, was geändert wurde, und korrigiert die Speicherbereiche 23 und 24 entsprechend.

Auf die Speicherbereiche 23 bzw. 24 wird von WINDOWS aus normalerweise nicht zugegriffen. Falls WINDOWS dennoch auf diese Speicherbereiche zuzugreifen versucht, wird die Zugriffsadresse derart manipuliert, daß WINDOWS auf eine Kopie des Speicherbereichs 19', z. B. auf den Speicherbereich 26', zugreift. Die Kopie kann dabei temporär oder permanent im Speicherbereich 26' abgespeichert sein.

Die Korrektur des Inhalts der Speicherbereiche 19', 23 und 24 erfolgt dabei analog zur Vorgehensweise bei einem schreibenden Zugriff auf den Speicherbereich 19'.

Beim Ausführen von Speicherzugriffen und privilegierten Befehlen durch WINDOWS muß das Verwaltungsprogramm wissen, ob WINDOWS bei diesem Zugriff scheinbar, d. h. für die Sicht aus WINDOWS, in der privilegierten Betriebsart oder in der Normalbetriebsart ist. Es muß daher überwacht werden, wann WINDOWS seine Betriebsart wechseln will.

Wenn der Prozessor 2 von WINDOWS aus scheinbar von der Normalbetriebsart, also von der Programmausführung, in die privilegierte Betriebsart, also die Betriebssystemebene, geschaltet werden soll, so ist dies sehr einfach zu detektieren. Ein Umschalten in die privilegierte Betriebsart ist nämlich aufgrund des im Speicherbereich 24 abgespeicherten Konfigurationsdatensatzes verboten. Der Umschaltversuch erzeugt folglich einen Interrupt, mittels dessen das Verwaltungsprogramm das Umschalten detektiert. Gleiches gilt, wenn versucht wird, von Betriebssystemebene, also scheinbar privilegierter Betriebsart, in den virtual86-mode umzuschalten. Auch dieser Versuch erzeugt einen Interrupt. Einzig das Umschalten von scheinbar privilegierter Betriebsart in scheinbar und tatsächlich normale Betriebsart erfordert einen etwas höheren Aufwand. Hierzu wird wie folgt vorgegangen:

Speicherzugriffe erfolgen im protected mode wie folgt: Eine Adresse zerfällt in eine Basisadresse und eine Offset-Adresse. Für die Basisadresse wird in einer descriptor table, die Bestandteil eines Konfigurationsdatensatzes ist, die korrespondierende Speicheradresse ermittelt. Die Kombination von Speicheradresse und Offset-Adresse ergibt dann die tatsächliche Adresse, auf die zugegriffen wird.

Jedem Eintrag in der descriptor table sind dabei außer der Speicheradresse noch zwei Bits zugeordnet. Das erste Bit gibt an, ob die Daten nur lesbar oder sowohl les- als auch schreibbar sind. Das zweite Bit gibt an, ob von der Normalbetriebsart aus auf die mit der Speicheradresse korrelierten Speicherplätze des Speichers 3 zugegriffen werden darf. Wenn WINDOWS sich scheinbar in der privilegierten Betriebsart befindet, so wird die descriptor table des Konfigurationsdatensatzes 23 verwendet. In dieser table sind alle Einträge, die sich auf scheinbaren Normalbetrieb beziehen, derart modifiziert, daß sie auf nicht existente Speicherbereiche verweisen. Wenn nun versucht wird, auf einen Speicherbereich zuzugreifen, in dem beispielsweise ein WINDOWS-Programm abgespeichert ist, so erzeugt dies einen Interrupt, da der Zugriff nicht ausführbar ist. Das Verwaltungsprogramm kann daher feststellen, daß versucht wurde, ein Programm von WINDOWS aus anzusprechen. Der Prozessor 2 muß also scheinbar in die Normalbetriebsart umgeschaltet werden, in der er sich bereits befindet. Dies geschieht dadurch, daß von nun an die descriptor table des Konfigurationsdatensatzes 24 verwendet wird, in der die korrekten Einträge abgespeichert sind.

Wenn beim Arbeiten in WINDOWS ein unzulässiger Betriebszustand von WINDOWS auftritt, kann es geschehen, daß ein Weiterarbeiten in WINDOWS nicht mehr möglich ist. In diesem Fall muß der Bediener des Rechners 1 gleichzeitig die Tasten Delete, Control und Alternate drücken. Das Drücken dieser Tasten erzeugt wieder einen Interrupt, aufgrund dessen das Verwaltungsprogramm aufgerufen wird. Das Verwaltungsprogramm kann daher bei entsprechender Programmierung MS-DOS und WINDOWS erneut laden.

Mittels der obenstehenden Vorgehensweisen ist gewährleistet, daß WINDOWS und Programme, die von WINDOWS aus aufgerufen werden, uneingeschränkt ablauf fähig sind. Es ist aber auch gewährleistet, daß Programme, die unter WINDOWS laufen, sowie WINDOWS selbst jederzeit unterbrechbar sind, so daß die Echtzeitanforderungen, die durch das Echtzeit-betriebssystem gestellt werden, jederzeit erfüllt werden können. Es ist also möglich, einerseits einen echtzeitfähigen Rechner zu erhalten und andererseits gleichzeitig auf diesem Rechner das weitverbreitete, nicht echtzeitfähige Betriebssystem WINDOWS ablaufen zu lassen.

## Patentansprüche

1. Betriebsverfahren für einen Rechner (1) mit einem Prozessor (2) und einem Speicher (3),
- wobei im Speicher (3) ein Betriebssystem und ein dem Betriebssystem vorgeschaltetes Verwaltungsprogramm abgespeichert sind,
- wobei im Speicher (3) für das Betriebssystem und das Verwaltungsprogramm mindestens je ein Konfigurationsdatensatz abgespeichert ist, mittels dessen festlegbar ist, welche Befugnisse dem Betriebssystem bzw. dem Verwaltungsprogramm zugeordnet sind,
- wobei die Konfigurationsdatensatze nur mittels des Verwaltungsprogramms änderbar sind.

2. Betriebsverfahren nach Anspruch 1, **dadurch gekennzeichnet,** daß der Prozessor (2) in einer Normalbetriebsart mit Normalbefehlen und in einer privilegierten Betriebsart zusätzlich auch mit privilegierten Befehlen betreibbar ist, daß das Betriebssystem in der Normalbetriebsart abgearbeitet wird und daß das Verwaltungsprogramm in der privilegierten Betriebsart abgearbeitet wird.

3. Betriebsverfahren nach Anspruch 2, **dadurch gekennzeichnet,** daß das Betriebssystem für den Anwender teilweise in der privilegierten Betriebsart abgearbeitet zu werden scheint.

4. Betriebsverfahren nach Anspruch 3, **dadurch gekennzeichnet,** daß zur Festlegung der Befugnisse des Betriebssystems bei scheinbarer Abarbeitung in der privilegierten Betriebsart und bei Abarbeitung in der Normalbetriebsart je ein eigener Konfigurationsdatensatz verwendet wird.

5. Betriebsverfahren nach Anspruch 3 oder 4,**dadurch gekennzeichnet,** daß das Abarbeiten privilegierter Befehle durch das Betriebssystem einen Interrupt erzeugt, daß das Verwaltungsprogramm aufgrund des dem Betriebssystem zugeordneten Konfigurationsdatensatzes überprüft, ob das Betriebssystem diesen Befehl ausführen darf, daß das Verwaltungsprogramm je nach dem Ergebnis der Prüfung den privilegierten Befehl ausführt oder nicht und daß das Verwaltungsprogramm sodann wieder das Betriebssystem aufruft.

6. Betriebsverfahren nach einem der obigen Ansprüche, **dadurch gekennzeichnet,** daß der Prozessor (2) durch Interrupts unterbrechbar ist und daß alle Interrupts einen Aufruf des Verwaltungsprogramms auslösen.

7. Betriebsverfahren nach Anspruch 6, **dadurch gekennzeichnet,** daß die Interrupts nur vom Verwaltungsprogramm aus sperr- bzw. freigebbar sind.

8. Betriebsverfahren nach einem der obigen Ansprüche, **dadurch gekennzeichnet**, daß das Betriebssystem jederzeit ohne Beeinflussung des Verwaltungsprogramms reinitialisiert werden kann.

9. Betriebsverfahren nach einem der obigen Ansprüche, **dadurch gekennzeichnet**, daß das Verwaltungsprogramm im Rahmen eines Echtzeit-Betriebssystems zur Bewältigung von Steuerungsaufgaben abgearbeitet wird.

10. Betriebsverfahren nach Anspruch 9, **dadurch gekennzeichnet,** daß das Echtzeit-Betriebssystem seine Steuerungsaufgaben unbeeinflußt vom Betriebssystem abarbeitet.

11. Rechner mit einem Prozessor (2) und einem Speicher (3), wobei im Speicher (3) ein Betriebssystem und ein dem Betriebssystem vorgeschaltetes Verwaltungsprogramm abspeicherbar sind, wobei im Speicher (3) für das Betriebssystem und das Verwaltungsprogramm mindestens je ein Konfigurationsdatensatz abspeicherbar ist, wobei mittels der Konfigurationsdatensätze festlegbar ist, welche Befugnisse dem Betriebssystem und dem Verwaltungsprogramm zugeordnet sind, wobei die Konfigurationsdatensätze nur vom Verwaltungsprogramm aus änderbar sind.

12. Rechner nach Anspruch 11 **dadurch gekennzeichnet**, daß der Prozessor (2) eine Normalbetriebsart und eine privilegierte Betriebsart aufweist und daß dem Betriebssystem die Normalbetriebsart und dem Verwaltungsprogramm die privilegierte Betriebsart zugeordnet sind.

13. Rechner nach Anspruch 12, **dadurch gekennzeichnet,** daß im Speicher (3) für eine scheinbare Zuordnung der privilegierten Betriebsart an das Betriebssystem ein zusätzlicher Konfigurationsdatensatz abspeicherbar ist.

14. Rechner nach Anspruch 12 oder 13, **dadurch gekennzeichnet,** daß der Prozessor (2) durch Interrupts unterbrechbar ist und daß Interrupts dem Betriebssystem ausschließlich über das Verwaltungsprogramm zuführbar sind.

15. Rechner nach Anspruch 14, **dadurch gekennzeichnet,** daß die Interrupts nur vom Verwaltungsprogramm aus sperr- bzw. freigebbar sind.

16. Rechner nach einem der Ansprüche 11 bis 15, **dadurch gekennzeichnet,** daß das Betriebssystem als Standardbetriebssystem ausgebildet ist und daß das Verwaltungsprogramm Teil eines Echtzeit-Betriebssystems zur Bewältigung von Steuerungsaufgaben ist.

17. Rechner nach Anspruch 16, **dadurch gekennzeichnet,** daß das Echtzeit-Betriebssystem vom Betriebssystem unbeeinflußbar ist.

## Claims

1. Operating method for a computer (1) having a processor (2) and a memory (3),
- an operating system and a management program inserted upstream of the operating system being stored in the memory (3),
- in which there is stored in the memory (3) for the operating system and the management program at least one configuration dataset in each case which stipulates which powers are assigned to the operating system or to the management program, respectively,
- in which the configuration datasets can only be changed by means of the management program.

2. Operating method according to Claim 1, characterized in that the processor (2) can be operated with normal commands in a normal operating mode and additionally also with privileged commands in a privileged operating mode, in that the operating system is processed in the normal operating mode and in that the management program is processed in the privileged operating mode.

3. Operating method according to Claim 2, characterized in that the operating system appears to the user to be partially processed in the privileged operating mode.

4. Operating method according to Claim 3, characterized in that a separate configuration dataset is used in each case to stipulate the powers of the operating system for apparent processing in the privileged operating mode and for processing in the normal operating mode.

5. Operating method according to Claim 3 or 4, characterized in that the processing of privileged commands by the operating system generates an interrupt, in that, on the basis of the configuration dataset assigned to the operating system, the management program checks whether the operating system is allowed to execute said command, in that the management program executes the privileged command depending on the result of the check and in that the management program then invokes the operating system again.

6. Operating method according to one of the above claims, characterized in that the processor (2) can be interrupted by interrupts and in that all the interrupts initiate an invocation of the management program.

7. Operating method according to Claim 6, characterized in that the interrupts can be disabled or cleared only by the management program.

8. Operating method according to one of the above claims, characterized in that the operating system can be reinitialized at any time without affecting the management program.

9. Operating method according to one of the above claims, characterized in that the management program is processed as part of a real-time operating system for loading control tasks.

10. Operating method according to Claim 9, characterized in that the real-time operating system processes its control tasks unaffected by the operating system.

11. Computer having a processor (2) and a memory (3), in which an operating system and a management program inserted upstream of the operating system can be stored in the memory (3), in which at least one configuration dataset can be stored in each case in the memory (3) for the operating system and the management program, in which the configuration datasets can stipulate which powers are assigned to the operating system and the management program, and in which the configuration datasets can be changed only by the management program.

12. Computer according to Claim 11, characterized in that the processor (2) has a normal operating mode and a privileged operating mode and in that the normal operating mode is assigned to the operating system and the privileged operating mode to the management program.

13. Computer according to Claim 12, characterized in that an additional configuration dataset can be stored in the memory (3) for an apparent assignment of the privileged operating mode to the operating system.

14. Computer according to Claim 12 or 13, characterized in that the processor (2) can be interrupted by interrupts and in that interrupts can be fed to the operating system solely by means of the management program.

15. Computer according to Claim 14, characterized in that the interrupts can be disabled or cleared only by the management program.

16. Computer according to one of Claims 11 to 15, characterized in that the operating system is designed as standard operating system and in that the management program is part of a real-time operating system for loading control tasks.

17. Computer according to Claim 16, characterized in that the real-time operating system is unaffected by the operating system.

## Revendications

1. Procédé d'exploitation d'un ordinateur (1) comportant un processeur (2) et une mémoire (3),
- un système d'exploitation et un programme de gestion en amont du système d'exploitation étant mémorisés dans la mémoire (3),
- il est mémorisé dans la mémoire (3), pour le système d'exploitation et le programme de gestion, au moins pour chacun un jeu de données de configuration au moyen duquel les autorisations qui sont affectées au système d'exploitation ou au programme de gestion peuvent être fixées,
- les jeux de données de configuration ne pouvant être modifiés qu'au moyen du programme de gestion.

2. Procédé de fonctionnement suivant la revendication 1, caractérisé en ce que l'on peut faire fonctionner le processeur (2) en un mode de fonctionnement normal à instructions normales et en un mode de fonctionnement privilégié ayant de plus aussi des instructions privilégiées, en ce que le système d'exploitation est traité en le mode de fonctionnement normal et en ce que le programme de gestion est traité en le mode de fonctionnement privilégié.

3. Procédé d'exploitation suivant la revendication 2, caractérisé en ce que le système d'exploitation semble, pour l'utilisateur, être traité en partie en le mode de fonctionnement privilégié.

4. Procédé d'exploitation suivant la revendication 3, caractérisé en ce que, pour fixer les autorisations du système d'exploitation lors d'un traitement apparent en le mode de fonctionnement privilégié et lors d'un traitement en le mode de fonctionnement normal, on utilise chaque fois un jeu de données de configuration spécifique.

5. Procédé d'exploitation suivant la revendication 3 ou 4, caractérisé en ce que le traitement d'instructions privilégiées par le système d'exploitation produit un interrupt, en ce que le programme de gestion vérifie sur la base du jeu de données de configuration affecté au système d'exploitation si le système d'exploitation peut exécuter cette instruction, en ce que le programme de gestion, suivant le résultat de la vérification, exécute ou non l'instruction privilégiée et en ce que le programme de gestion appelle ensuite à nouveau le système d'exploitation.

6. Procédé d'exploitation suivant l'une des revendications précédentes, caractérisé en ce que le processeur (2) peut être interrompu par des interrupts et en ce que tous les interrupts déclenchent un appel du programme de gestion.

7. Procédé d'exploitation suivant la revendication 6, caractérisé en ce que les interrupts ne peuvent être bloqués ou libérés que par le programme de gestion.

8. Procédé d'exploitation suivant l'une des revendications précédentes, caractérisé en ce que le système d'exploitation peut être réinitialisé à tout moment sans influence du programme de gestion.

9. Procédé d'exploitation suivant l'une des revendications précédentes, caractérisé en ce que le programme de gestion est traité dans le cadre d'un système d'exploitation en temps réel afin de venir à bout de tâches de commande.

10. Procédé d'exploitation suivant la revendication 9, caractérisé en ce que le système d'exploitation en temps réel traite ces tâches de commande sans être influencé par le système d'exploitation.

11. Ordinateur comportant un processeur (2) et une mémoire (3), un système d'exploitation et un programme de gestion en amont du système d'exploitation pouvant être mémorisés dans la mémoire (3), au moins chaque fois un jeu de données de configuration pouvant être mis en mémoire dans la mémoire (3) pour le système d'exploitation et pour le programme de gestion, les autorisations qui sont affectées au système d'exploitation et au programme de gestion pouvant être fixées au moyen des jeux de données de configuration, les jeux de données de configuration ne pouvant être modifiés que par le programme de gestion.

12. Ordinateur suivant la revendication 11, caractérisé en ce que le processeur (2) comporte un mode de fonctionnement normal et un mode de fonctionnement privilégié et en ce que le mode de fonctionnement normal est affecté au système d'exploitation et le mode de fonctionnement privilégié est affecté au programme de gestion.

13. Ordinateur suivant la revendication 12, caractérisé en ce qu'il peut être mis en mémoire dans la mémoire (3) un jeu de données de configuration supplémentaire pour une affectation apparente du mode de fonctionnement privilégié au système d'exploitation.

14. Ordinateur suivant la revendication 12 ou 13, caractérisé en ce que le processeur (2) peut être interrompu par des interrupts et en ce que des interrupts peuvent être envoyés au système d'exploitation exclusivement par l'intermédiaire du programme de gestion.

15. Ordinateur suivant la revendication 14, caractérisé en ce que les interrupts ne peuvent être bloqués ou libérés que par le programme de gestion.

16. Ordinateur suivant l'une des revendications 11 à 15, caractérisé en ce que le système d'exploitation est réalisé en système d'exploitation normalisé et en ce que le programme de gestion fait partie d'un système d'exploitation en temps réel servant à venir à bout de tâches de commande.

17. Ordinateur suivant la revendication 16, caractérisé en ce que le système d'exploitation en temps réel ne peut pas être influencé par le système d'exploitation.
